# DEMANDE DE BREVET EUROPEEN

(11) **EP 1 255 117 A2**
(43) Date de publication de la demande: **06.11.2002**
(21) Numéro de dépôt: 02291043.4
(22) Date de dépôt: 24.04.2002
(51) Int. Cl.: G01P 3/44

(54) **Ensemble comprenant un roulement instrumenté d'un capteur de vitesse et un logement associés par une piece d'emmanchement**

(30) Priorité: 04.05.2001 FR 0106020
(71) Demandeur: SNR ROULEMENTS, F-74010 Annecy (FR)
(72) Inventeur: Beauprez, Jean-Michel, 74270 Menthonney-Sous-Clermont (FR)
(74) Mandataire: Geismar, Thierry

(57) **Abrégé**

Ensemble comprenant un roulement (1) équipé d'un dispositif capteur d'informations et un logement (2) à l'intérieur duquel ledit roulement est emmanché, dans lequel :
- ledit logement (2) est agencé pour permettre un blocage radial dudit roulement (1) ;
- ledit logement (2) présente des premiers moyens de blocage axial (19) du roulement (1) dans un sens ;
ledit ensemble comprenant en outre une pièce d'emmanchement (20) du roulement (1) à l'intérieur du logement (2), ladite pièce (20) étant pourvue, en combinaison :
- d'un dispositif de retenue axiale mutuelle du capteur (12) et de la bague fixe (4) ;
- de deuxièmes moyens de blocage (26) du roulement (1), lesdits deuxièmes moyens étant agencés pour coopérer avec des moyens complémentaires (27) prévus sur le logement (2) de sorte à assurer le blocage du roulement (1) au moins dans l'autre sens.

## Description

L'invention concerne un ensemble comprenant un roulement équipé d'un dispositif capteur d'informations et un logement à l'intérieur duquel ledit roulement est emmanché.

De tels ensembles permettent d'une part la mise en rotation d'un organe tournant en l'associant à la bague tournante et d'autre part le blocage en position du roulement et de l'organe par rapport au logement.

L'invention concerne également un système de direction de véhicule automobile comprenant une colonne de direction emmanchée dans la bague intérieure d'un tel ensemble et un tube de direction dans lequel le logement est formé pour recevoir en rotation ladite colonne.

Dans de tels ensembles, lorsque le roulement est équipé d'un dispositif capteur de vitesse de rotation, de positon angulaire et/ou de sens de rotation de la bague tournante par rapport à la bague fixe, les informations peuvent être converties en signaux fonction du couple exercé sur la colonne par l'intermédiaire du volant, lesdits signaux étant utilisés par un calculateur d'assistance de direction.

Dans un autre exemple d'application, de tels ensembles sont utilisés pour les roues de véhicules automobiles qui sont pourvues de système anti-blocage desdites roues, et les informations sont alors notamment utilisées par un calculateur d'assistance au freinage.

On connaît déjà des roulements équipés d'un dispositif capteur d'informations qui comprend un codeur générateur d'impulsions magnétiques associé à la bague tournante et, associé à la bague fixe, un capteur muni d'au moins deux éléments sensibles aptes à détecter ces impulsions.

Par ailleurs, on connaît du document US-5 927 867 un dispositif de fixation comprenant une douille pourvue de saillies, ladite douille étant emmanchée sur la bague extérieure du roulement avec les saillies disposées à l'intérieur d'une rainure prévue dans le logement. Dans un mode de réalisation, la douille porte le capteur.

Cette réalisation présente de nombreux inconvénients.

En particulier, elle ne permet pas d'assurer une fixation suffisamment sûre du roulement à l'intérieur du logement. En effet, la fixation est assurée seulement par une portée d'encastrement sur laquelle tous les efforts subis par le roulement s'appliquent.

En outre, le capteur étant associé à la douille qui est susceptible de bouger notamment en rotation sous l'effet des efforts subis, cette réalisation n'assure pas un positionnement précis du capteur par rapport au codeur.

Et, notamment pour des utilisations de sécurité telles que l'anti-blocage des roues ou l'assistance à la direction, le capteur doit être solidarisé au roulement de façon précise et sûre afin que les éléments sensibles soient toujours en regard et à distance d'entrefer du codeur.

L'invention vise donc notamment à remédier à ces inconvénients en proposant un ensemble dans lequel d'une part le roulement est fixé de façon sûre à l'intérieur du logement et d'autre part les éléments sensibles du capteur sont disposés de façon précise et sûre en regard et à distance d'entrefer du codeur.

A cet effet et selon un premier aspect, l'invention propose un ensemble comprenant un roulement équipé d'un dispositif capteur d'informations et un logement à l'intérieur duquel ledit roulement est emmanché, dans lequel :
- ledit roulement comprend une bague intérieure tournante destinée à être associée à un organe tournant, une bague extérieure fixe emmanchée dans le logement et des corps roulants disposés entre elles ;
- ledit dispositif capteur d'informations comprend un codeur générateur d'impulsions magnétiques associé à la bague tournante et, associé à la bague fixe, un capteur muni d'au moins deux éléments sensibles aptes à détecter ces impulsions ;
- ledit logement est agencé pour permettre un blocage radial dudit roulement ;
- ledit logement présente des premiers moyens de blocage axial du roulement dans un sens ;
ledit ensemble comprenant en outre une pièce d'emmanchement du roulement à l'intérieur du logement, ladite pièce étant pourvue, en combinaison :
- d'un dispositif de retenue axiale mutuelle du capteur et de la bague fixe ;
- de deuxièmes moyens de blocage du roulement, lesdits deuxièmes moyens étant agencés pour coopérer avec des moyens complémentaires prévus sur le logement de sorte à assurer le blocage du roulement au moins dans l'autre sens.

Selon un deuxième aspect, l'invention propose un système de direction de véhicule automobile comprenant une colonne de direction emmanchée dans la bague intérieure d'un tel ensemble et un tube de direction recevant ladite colonne en rotation, dans lequel le logement est formé dans le tube.

D'autres objets et avantages de l'invention apparaîtront au cours de la description qui suit, faite en référence aux dessins annexés, dans lesquels :
- la figure 1 représente, en coupe longitudinale, un premier mode de réalisation d'un ensemble selon l'invention ;
- la figure 2 représente une vue avant en coupe partielle suivant II de l'ensemble représenté sur la figure 1 ;
- la figure 3 représente, en coupe longitudinale, un deuxième mode de réalisation d'un ensemble selon l'invention.

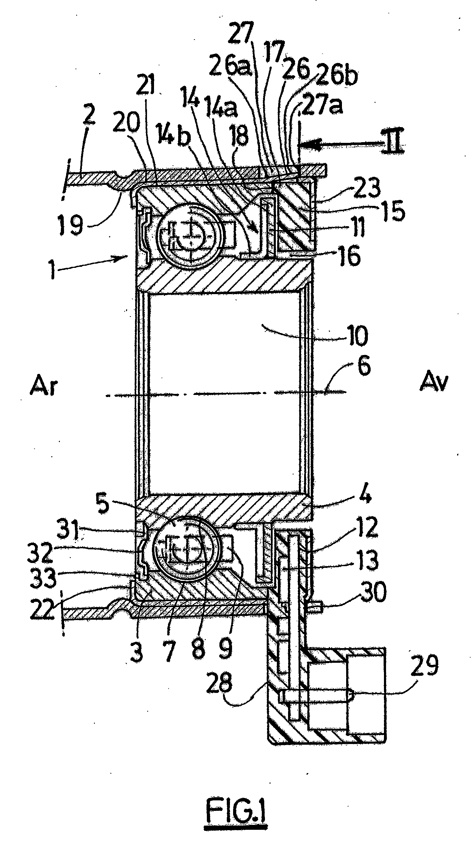

Sur les figures 1 à 3 est représenté un ensemble comprenant un roulement 1 équipé d'un dispositif capteur d'informations et un logement 2 à l'intérieur duquel ledit roulement 1 est associé par emmanchement.

Le roulement 1 comprend une bague extérieure fixe 3 emmanchée dans le logement 2, une bague intérieure tournante 4 et des corps roulants 5 disposés entre elles afin de permettre la rotation relative de ces deux bagues 4, 5 autour d'un axe 6.

Par emmanchement, on entend que le roulement 1 est disposé à force dans le logement 2 avec la face supérieure de la bague fixe 3 associée à la face intérieure du logement 2.

Dans la description, les termes « extérieur » et « intérieur » sont définis par rapport à un plan respectivement opposé et en regard de l'axe 6, les termes « axial» ou « transversal » sont définis par rapport à un plan parallèle à l'axe 6, les termes « radial » ou « latéral » sont définis par rapport à un plan perpendiculaire à l'axe 6, les termes « avant » et « arrière » sont définis par rapport aux indices av et ar placés sur les figures, les dimensions mesurées selon l'axe 6 ou perpendiculairement à lui sont dites respectivement « axiales » et « radiales ».

Dans les modes de réalisation représentés, un chemin de roulement 7, 8 est réalisé respectivement sur la face intérieure de la bague fixe 3 et sur la face extérieure de la bague tournante 4, et le roulement est assuré par une rangée de billes 5 qui sont maintenues à équidistance par une cage 9.

De tels roulements 1 sont par exemple utilisés pour assurer la rotation d'une colonne de direction ou celle des roues d'un véhicule automobile. A cet effet, la bague intérieure 4 présente un alésage 10 destiné à loger la colonne de direction ou le moyeu de la roue.

Lorsque l'on veut connaître la vitesse de rotation, le sens de déplacement et/ou la position angulaire de la bague tournante 4 par rapport à la bague fixe 3, il est connu d'utiliser un dispositif capteur d'informations comprenant un codeur 11 générateur d'impulsions magnétiques associé à la bague tournante 4 et, associé à la bague fixe 3, un capteur 12 muni d'au moins deux éléments sensibles 13 aptes à détecter ces impulsions.

Ce type d'informations, après traitement électronique tel que par exemple celui décrit dans le document FR-2 792 380, est classiquement utilisé dans des systèmes d'aide à la conduite tels que l'assistance de direction ou des systèmes d'anti-blocage des roues.

Dans un exemple particulier, le codeur 11 est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

Dans les modes de réalisation représentés, le codeur 11 est surmoulé sur une portée cylindrique annulaire et radiale 14a d'une armature 14. L'armature 14 comprend également une portée cylindrique annulaire et axiale 14b qui est associée, par exemple par emmanchement, sur la face extérieure de la bague intérieure 4. Cette réalisation permet la mise en rotation conjointe du codeur 11 et de la bague intérieure 4.

Dans un exemple particulier, le capteur 12 comprend au moins deux éléments sensibles 13, par exemple une pluralité d'éléments sensibles alignés, qui sont choisis parmi les sondes à effet Hall, les magnétorésistances, les magnétorésistances géantes. De façon connue, de tels éléments sont aptes à détecter les impulsions magnétiques générées par le codeur 11 de sorte à fournir des signaux par exemple représentatifs de la vitesse de rotation, du sens de déplacement et/ou de la position angulaire de la bague tournante 4 par rapport à bague fixe 3.

Dans les modes de réalisation représentés sur les figures, le capteur 12 est formé d'un anneau 15 concentrique au roulement 1 et un alésage 16 est formé dans l'anneau 15 pour qu'il n'interfère pas avec la rotation de la bague tournante 4.

L'anneau 15 comprend une extension périphérique 17 s'étendant axialement vers l'arrière et dont la longueur est agencée pour, en venant en appui sur la face latérale avant 18 de la bague fixe 3, permettre le positionnement des éléments sensibles 13 en regard et à distance d'entrefer du codeur 11.

A cet effet, la face latérale avant 18 ne comporte aucun usinage spécifique pour permettre le maintien ou la mise en position du capteur 12 avec les éléments sensibles 13 à distance d'entrefer du codeur 11.

Dans un exemple particulier, le capteur 12 est réalisé de façon monobloc, par exemple par moulage d'un matériau plastique, avec les éléments sensibles 13 disposés dans la masse de l'anneau 15.

Dans les modes de réalisation représentés, le logement 2 est cylindrique avec un diamètre intérieur sensiblement égal au diamètre extérieur de la bague extérieure 3 afin de permettre l'emmanchement en assurant un blocage radial du roulement 1 à l'intérieur du logement 2.

Dans un exemple particulier, le logement 2 est formé dans un tube de direction de sorte à être intégré à lui, et le roulement 1 permet le blocage axial et radial ainsi que la mise en rotation d'une colonne de direction à l'intérieur de ce tube.

A cet effet, le logement 2 peut soit être formé d'un tronçon de tube soit être réalisée dans un tronçon de tube, par exemple par usinage ou déformation de celui-ci.

Le logement 2 présente des premiers moyens de blocage axial du roulement dans un sens qui sont formés d'un épaulement 19 dont le diamètre intérieur est inférieur au diamètre extérieur de la bague extérieure 3.

Ainsi, lorsque le roulement 1 est introduit dans le logement 2 par l'avant, le roulement vient en butée axiale sur l'épaulement 19 ce qui assure son blocage vers l'arrière.

L'ensemble comprend en outre une pièce d'emmanchement 20 du roulement 1 à l'intérieur du logement 2, ladite pièce étant agencée pour sensiblement ne pas limiter la longueur de la portée d'emmanchement.

Cette réalisation permet d'assurer le blocage d'une part du roulement 1 à l'intérieur du logement 2 et d'autre part de la pièce 20 par rapport au logement 2 et au roulement 1.

Dans les modes de réalisation représentés sur les figures, la pièce d'emmanchement est formée d'une gaine 20, par exemple réalisée en matériau métallique par usinage dans la masse ou à partir d'un tube, qui comprend une portée cylindrique d'emmanchement 21 s'étendant sur au moins une partie des faces transversales extérieures du capteur 12 et de la bague fixe 3.

En outre, la gaine 20 est pourvue d'un dispositif de retenue axiale mutuelle du capteur 12 et de la bague fixe 3 agencé pour permettre leur assemblage. Ainsi, la gaine 20 étant bloquée en position par l'intermédiaire de sa portée d'emmanchement 21, la disposition du capteur 12 en regard et à distance d'entrefer du codeur 11 est réalisée de façon précise et sûre.

A cet effet, le dispositif de retenue comprend des moyens de retenue avant et des moyens de retenue arrière qui sont prévus de part et d'autre de ladite portée 21 respectivement pour retenir le capteur 12 et la bague extérieure 3. La distance entre les moyens de retenue respectivement avant et arrière est agencée pour permettre la mise en contact sans jeu de l'extension périphérique 17 en appui sur la face latérale avant 18 de la bague fixe 3.

Cette réalisation permet d'assurer un positionnement précis des éléments sensibles 13 à distance d'entrefer du codeur 11 en empêchant tout mouvement relatif du capteur 12 par rapport à la bague extérieure 3 et donc par rapport au codeur 11.

En outre, les deux moyens de retenue axiale formant d'une part butée mécanique et d'autre part étant réalisés sur la pièce d'emmanchement 20, l'association du capteur 12 sur la bague extérieure 3 est réalisée de façon très sûre.

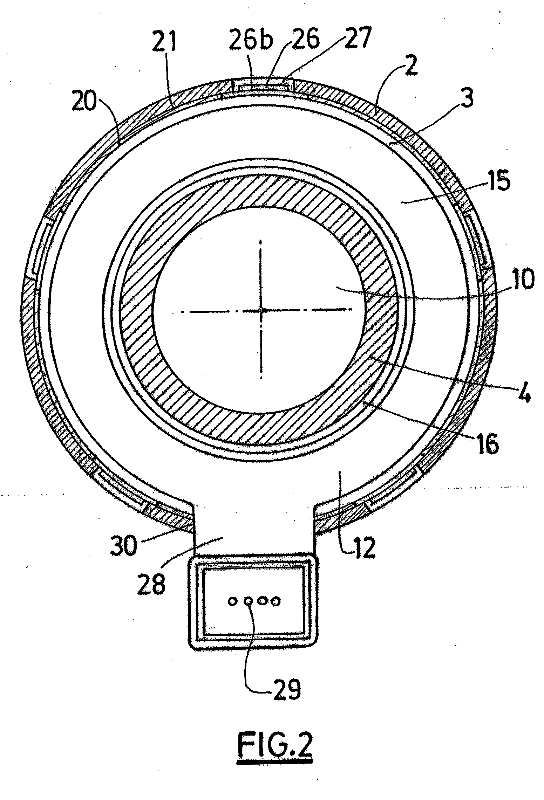

Dans le premier mode de réalisation représenté sur les figures 1 et 2, la portée 21 s'étend sur toute la longueur axiale des faces transversales extérieures du capteur 12 et de la bague extérieure 3, et les moyens de retenue respectivement avant et arrière sont en appui sur au moins une partie des faces latérales respectivement avant et arrière du capteur 12 et de la bague extérieure 3.

Les moyens de retenue arrière comprennent un épaulement radial 22 et les moyens de retenue avant sont formés d'une pluralité de griffes 23 rabattues radialement sur la face avant de l'anneau 15, lesdites griffes 23 étant reparties sur la périphérie de la gaine 20.

Toutefois, d'autres réalisations sont envisageables, par exemple avec des moyens de retenue avant et arrière identiques.

L'épaulement 22 peut être formé par déformation plastique ou par usinage d'une extrémité de la gaine 20, puis, après disposition du roulement 1 et du capteur 12 à l'intérieur de la gaine 20, les griffes 23 sont rabattues de sorte à assurer le blocage axial du capteur 12 par rapport à la bague extérieure 3.

Ainsi, préalablement ou postérieurement à l'emmanchement du roulement 1 à l'intérieur du logement 2, le roulement 1 et le capteur 12 sont assemblés avec les éléments sensibles 13 en regard et à distance d'entrefer du codeur 11.

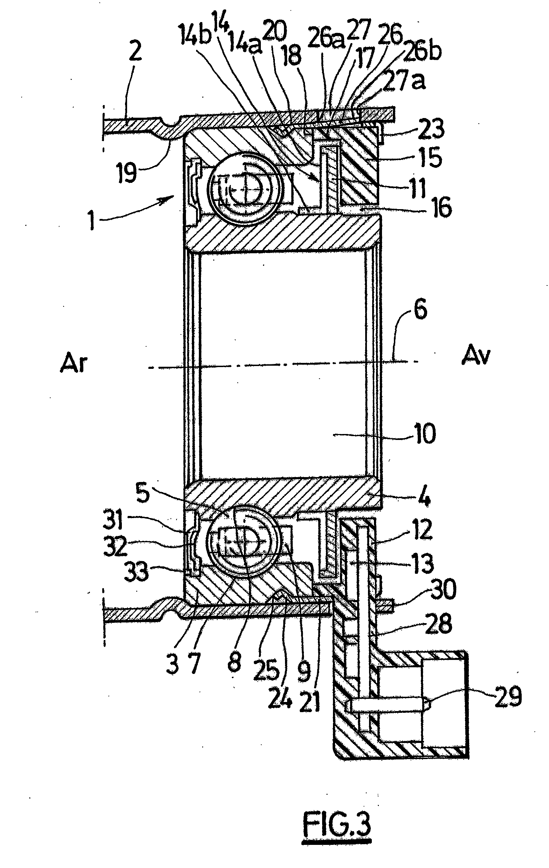

Dans le deuxième mode de réalisation représenté sur la figure 3, la portée 21 s'étend sur une partie de la face transversale extérieure de la bague extérieure 2 et sur toute la longueur axiale de la face transversale extérieure du capteur 12, le dispositif de retenue comprenant en outre des moyens de réception des moyens de retenue arrière.

Dans ce mode de réalisation, les moyens de retenue arrière comprennent un épaulement annulaire 24 et les moyens de réception comprennent un évidement annulaire 25 formé sur la face transversale extérieure de la bague extérieure 3 de sorte à recevoir ledit épaulement 24.

Dans cette réalisation, l'assemblage du capteur 12 sur la bague extérieure 3 est réalisé par le blocage radial de la gaine emmanchée 20 qui rend solidaire l'épaulement 24 et l'évidemment 25. En outre, les efforts transmis par les moyens de retenue avant au capteur 12 sont limités du fait que les moyens de retenue arrière assurent également une fonction de blocage du roulement 1 dans les deux sens.

Comme dans le premier mode de réalisation, les moyens de retenue avant peuvent comprendre un épaulement radial 22 et/ou une pluralité de griffes 23 rabattues radialement sur au moins une partie de la face latérale avant du capteur 12.

Dans les deux modes de réalisation représentés, la pièce d'emmanchement 20 est pourvue de deuxièmes moyens de blocage du roulement 1, lesdits deuxièmes moyens étant agencés pour coopérer avec des moyens complémentaires prévus sur le logement 2 de sorte à assurer le blocage du roulement 1 au moins vers l'avant.

Les deuxièmes moyens de blocage comprennent une pluralité de languettes élastiques 26 qui sont régulièrement disposées au voisinage de la périphérie avant de la pièce d'emmanchement 20. Les languettes sont découpées et conformées de sorte qu'elles restent associées à la pièce 20 par leur bord arrière 26a et que leur extrémité avant 26b saille radialement vers l'extérieur de la surface de ladite pièce 20.

Ainsi, les languettes 26 sont aptes à se rabattre sensiblement dans le plan de la pièce 20 afin de permettre l'emmanchement du roulement 1 dans le logement 2, puis à se redéployer radialement du fait de l'élasticité du matériau formant la pièce 20.

Dans les modes de réalisation représentés, les moyens complémentaires sont formés d'évidements 27 agencés pour recevoir respectivement lesdites languettes 26 déployées radialement, lesdits évidements 27 étant régulièrement répartis sur le logement 2. Ainsi, le blocage axial entre l'extrémité avant 26b d'une languette 26 et la face latérale arrière 27a d'un évidemment 27, combiné avec la présence du dispositif de retenue, permet de bloquer vers l'avant le roulement 1 à l'intérieur du logement 2.

Lors de l'introduction du roulement 1 dans le logement 2, les languettes 26 viennent en contact avec la face intérieure du logement 2 ce qui provoque leur rabattement radial et permet ainsi l'emmanchement, puis, lorsque les languettes 26 sont en regard des évidements 27, elles se déploient pour permettre le blocage axial du roulement 1.

A cet effet, la distance entre l'épaulement 19 et les évidements 27 est agencée pour bloquer axialement le roulement 1 sans jeu.

En outre, les largeurs respectives des languettes 26 et des évidements 27 peuvent être sensiblement égales de sorte à assurer un blocage en rotation du roulement 1 à l'intérieur du logement 2.

Dans un mode de réalisation non représenté, les moyens complémentaires sont formés d'une rainure annulaire formée sur la face intérieure du logement 2 de sorte à recevoir lesdites languettes 26 déployées radialement en permettant un blocage axial entre l'extrémité avant des languettes et la face latérale arrière de la rainure.

Suivant ces deux réalisations, l'emmanchement du roulement 1 à l'intérieur du logement 2 est réalisé de façon quasi irréversible puisqu'il interdit tout retour en arrière du roulement 1.

Dans les modes de réalisation représentés, le capteur 12 comprend un logement radial 28 agencé pour recevoir la connectique d'entrée/sortie 29 du capteur 12, par exemple formée d'un connecteur ou d'un câble multifilaire.

Le logement 2 comprend alors une découpe axiale 30 dont la taille est agencée pour recevoir le logement radial 28 en assurant un blocage en rotation du roulement 1 à l'intérieur du logement 2.

En outre, cette réalisation permet d'indexer l'introduction du roulement 1 à l'intérieur du logement 2 en disposant les languettes 26 en regard des évidements 27.

L'ensemble selon l'invention permet donc, de façon sûre et avec une seule pièce 20 de construction simple, d'une part d'assurer un blocage axial, radial et en rotation du roulement 1 à l'intérieur du logement 2 et d'autre part d'assurer l'association du capteur 12 sur le roulement 1 avec les éléments sensibles 13 en regard et à distance d'entrefer du codeur 11.

Dans les modes de réalisation représentés sur les figures, l'étanchéité du roulement 1 est assurée, sur la face arrière, par une lèvre en élastomère 31 qui frotte sur la bague intérieure 4. Pour ce faire, la lèvre 31 est surmoulée sur une armature 32 associée, par exemple par clipsage, dans une rainure 33 prévue sur la face intérieure de la bague extérieure 3.

L'étanchéité sur la face avant est réalisée grâce à la disposition relative de l'armature 14 et de l'anneau 15. En effet, ceux-ci forment une chicane qui permet d'éviter la pollution du roulement 1 et les fuites de lubrifiant. En particulier, le capteur 12 permet de protéger le codeur 11 en lui faisant face sur l'ensemble de sa périphérie afin de limiter la progression des polluants.

Toutefois, on peut prévoir d'autres moyens d'étanchéité, par exemple que les cages 9 comprennent des extensions axiales frottant sur les bagues afin de servir de déflecteurs ou, notamment pour des roulements pour mouvements alternatifs, d'utiliser un lubrifiant solide tel que décrit dans le document FR-2 760 055.

En outre, et pour améliorer l'étanchéité côté avant, une lèvre d'étanchéité telle que décrite ci-dessus peut être utilisée pour venir frotter sur la portée 14a de l'armature 14.

## Revendications

1. Ensemble comprenant un roulement (1) équipé d'un dispositif capteur d'informations et un logement (2) à l'intérieur duquel ledit roulement est emmanché, dans lequel :
- ledit roulement (1) comprend une bague intérieure tournante (4) destinée à être associée à un organe tournant, une bague extérieure fixe (3) emmanchée dans le logement (2) et des corps roulants (5) disposés entre elles ;
- ledit dispositif capteur d'informations comprend un codeur (11) générateur d'impulsions magnétiques associé à la bague tournante (4) et, associé à la bague fixe (3), un capteur (12) muni d'au moins deux éléments sensibles (13) aptes à détecter ces impulsions ;
- ledit logement (2) est agencé pour permettre un blocage radial dudit roulement (1) ;
- ledit logement (2) présente des premiers moyens de blocage axial (19) du roulement (1) dans un sens ;
ledit ensemble étant **caractérisé en ce qu'**il comprend en outre une pièce d'emmanchement (20) du roulement (1) à l'intérieur du logement (2), ladite pièce (20) étant pourvue, en combinaison :
- d'un dispositif de retenue axiale mutuelle du capteur (12) et de la bague fixe (4) ;
- de deuxièmes moyens de blocage (26) du roulement (1), lesdits deuxièmes moyens étant agencés pour coopérer avec des moyens complémentaires (27) prévus sur le logement (2) de sorte à assurer le blocage du roulement (1) au moins dans l'autre sens.

2. Ensemble selon la revendication 1, **caractérisé en ce que** la pièce d'emmanchement est formée d'une gaine d'assemblage (20) du capteur (12) avec la bague extérieure (3), ladite gaine (20) comprenant une portée cylindrique d'emmanchement (21) s'étendant sur au moins une partie des faces transversales extérieures du capteur (12) et de la bague fixe (3).

3. Ensemble selon la revendication 2, **caractérisé en ce que** le dispositif de retenue comprend des moyens de retenue avant et des moyens de retenue arrière qui sont prévus de part et d'autre de ladite portée (21) respectivement pour retenir le capteur (12) et la bague extérieure (3).

4. Ensemble selon la revendication 3, **caractérisé en ce que** la portée (21) s'étend sur toute la longueur axiale des faces transversales extérieures du capteur (12) et de la bague extérieure (3), et les moyens de retenue respectivement avant et arrière sont en appui sur au moins une partie des faces latérales respectivement avant et arrière du capteur (12) et de la bague extérieure (3).

5. Ensemble selon la revendication 4, **caractérisé en ce que** les moyens de retenue comprennent un épaulement radial (22) et/ou une pluralité de griffes (23) rabattues radialement.

6. Ensemble selon la revendication 3, **caractérisé en ce que** la portée (21) s'étend sur une partie de la face transversale extérieure de la bague extérieure (3) et sur toute la longueur axiale de la face transversale extérieure du capteur (12), le dispositif de retenue comprenant en outre des moyens de réception des moyens de retenue arrière.

7. Ensemble selon la revendication 6, **caractérisé en ce que** :
- les moyens de retenue arrière comprennent un épaulement annulaire (24) ;
- les moyens de réception comprennent un évidement annulaire (25) formée sur la face transversale extérieure de la bague extérieure (3) de sorte à recevoir ledit épaulement (24) ; et
- les moyens de retenue avant comprennent un épaulement radial (22) et/ou une pluralité de griffes (23) rabattues radialement sur au moins une partie de la face latérale avant du capteur (12).

8. Ensemble selon l'une quelconque des revendications 1 à 7, **caractérisé en ce que** les deuxièmes moyens de blocage comprennent une pluralité de languettes élastiques (26) qui sont découpées dans la pièce d'emmanchement (20) avec leur extrémité avant (26b) saillant radialement vers l'extérieur de la surface de ladite pièce (20), lesdites languettes (26) étant aptes à se rabattre sensiblement dans le plan de la pièce (20) afin de permettre l'emmanchement du roulement (1) dans le logement (2), puis à se redéployer radialement du fait de l'élasticité du matériau formant la pièce (20).

9. Ensemble selon la revendication 8, **caractérisé en ce que** les moyens complémentaires sont formés d'évidements (27) agencés pour recevoir respectivement lesdites languettes (26) déployées radialement, de sorte à permettre un blocage axial entre l'extrémité avant (26b) d'une languette (26) et la face latérale arrière (27a) d'un évidemment (27).

10. Ensemble selon la revendication 9, **caractérisé en ce que** les largeurs respectives des languettes (26) et des évidements (27) sont sensiblement égales de sorte à assurer un blocage en rotation du roulement (1) à l'intérieur du logement (2).

11. Ensemble selon la revendication 8, **caractérisé en ce que** les moyens complémentaires sont formés d'une rainure annulaire formée sur la surface intérieure du logement (2) de sorte à recevoir lesdites languettes (26) déployées radialement en permettant un blocage axial entre l'extrémité avant des languettes et la face latérale arrière de la rainure.

12. Ensemble selon l'une quelconque des revendications 1 à 11, **caractérisé en ce que** le capteur (12) est réalisé de façon monobloc avec les éléments sensibles (13) disposés en regard et à distance d'entrefer du codeur (11), et la connectique d'entrée/sortie (29) du capteur (12) disposée dans un logement radial (28).

13. Ensemble selon la revendication 12, **caractérisé en ce que** le logement (2) comprend une découpe axiale (30) dont la taille est agencée pour recevoir le logement radial (28) en assurant un blocage en rotation du roulement (1) à l'intérieur du logement (2).

14. Ensemble selon l'une quelconque des revendications 1 à 13, **caractérisé en ce que** les éléments sensibles (13) sont choisis parmi les sondes à effet Hall, les magnétorésistances, les magnétorésistances géantes.

15. Ensemble selon l'une quelconque des revendications 1 à 14, **caractérisé en ce que** le codeur (11) est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

16. Système de direction de véhicule automobile comprenant une colonne de direction emmanchée dans la bague intérieure (4) d'un ensemble selon l'une quelconque des revendications 1 à 15 et un tube de direction recevant ladite colonne en rotation, ledit système étant **caractérisé en ce que** le logement (2) est formé dans le tube.
